# EUROPÄISCHE PATENTANMELDUNG

(11) **EP 2 141 377 A2**
(43) Veröffentlichungstag der Anmeldung: **06.01.2010**
(21) Anmeldenummer: 09163841.1
(22) Anmeldetag: 26.06.2009
(51) Int. Cl.: F16D 13/70

(54) **Anpressplatte**

(30) Priorität: 03.07.2008 DE 102008031161
(71) Anmelder: ZF Friedrichshafen AG, 88038 Friedrichshafen (DE)
(72) Erfinder: Friedrich, Horst, 97491 Aidhausen (DE); Osterroth, Sven-Martin, 97337 Dettelbach (DE); Stützinger, Frank, 97505 Geldersheim (DE); Rottenberger, Theo, 97705 Burkardroth (DE)

(57) **Zusammenfassung**

Anpressplatte für eine Reibungskupplung zur Übertragung einer Anpresskraft auf Reibbeläge zumindest einer Kupplungsscheibe mit einer Anlagefläche zum Übertragen der Anpresskraft auf die Reibbeläge, einer Anpressplattenschneide (4) zur Beaufschlagung der Anpressplatte (1) durch die Membran- oder Tellerfeder oder ein Kraftübertragungselement, z.B. Hebel oder Hydraulikzylinder, mit einer Anpresskraft; ein elastisches Element (5) angeordnet zwischen der Anlagefläche (2) und der Anpressplattenschneide (4), wobei das elastische Element durch die Anpresskraft komprimiert werden kann; wobei das elastische Element unter Vorspannung angeordnet ist und erst mit Erreichen einer ersten Anpresskraft komprimiert wird, wobei die Anlagefläche (2) und die Anpressplattenschneide (4) eine begrenzte Relativbeweglichkeit in Kraftrichtung zueinander aufweisen.

## Beschreibung

Die vorliegende Anmeldung betrifft eine Anpressplatte für Reibungskupplungen für den Einsatz in Kraftfahrzeugen, insbesondere Kraftfahrzeugen im Renneinsatz nach dem Oberbegriff des Anspruchs 1.

Eine solche Reibungskupplung ist beispielsweise aus der US 5,123,510 bekannt. Bei dieser Reibungskupplung ist eine mehrteilige Anpressplatte im Einsatz, bei der zwischen dem die Anpressplattenschneide aufweisenden Bauteil und der mit den Reibbelägen zur Übertragung der Anpresskraft in Kontakt stehenden Anlagefläche ein Federring eingebracht ist, der in Richtung der Anpresskraft elastisch nachgiebig ausgeführt ist. Hierdurch soll das Einkuppelverhalten angenehmer und leichter dosierbar ausgestaltet werden.

Nachteilig bei dieser Lösung ist, dass hier der Einkuppelweg am Ausrücker bzw. am Kupplungspedal sich nachteilig verlängert. Insbesondere bei Kupplungen im Rennsport ist zur Erzielung einer hohen Anpresskraft nur ein begrenzter Pedalweg vorhanden.

Es ist daher Aufgabe der vorliegenden Erfindung, eine Reibungskupplung und eine Anpressplatte bereit zu stellen, die ein gut steuerbares Einkuppelverhalten ohne einen nachteilig großen Pedalweg aufweist. Hierbei ist insbesondere auch ein hysteresearmes Kuppelverhalten und günstige Bautraumausnutzung zu erzielen.

Erfindungsgemäß wird die Aufgabe durch die Merkmale des Kennzeichens des Anspruches 1 gelöst.

Weitere erfindungsgemäße Ausgestaltungen ergeben sich aus den Unteransprüchen.

Eine weitere erfindundungsgemäße Lösung wird durch eine Reibungskupplung nach den Merkmalen des Anspruchs 13 erzielt.

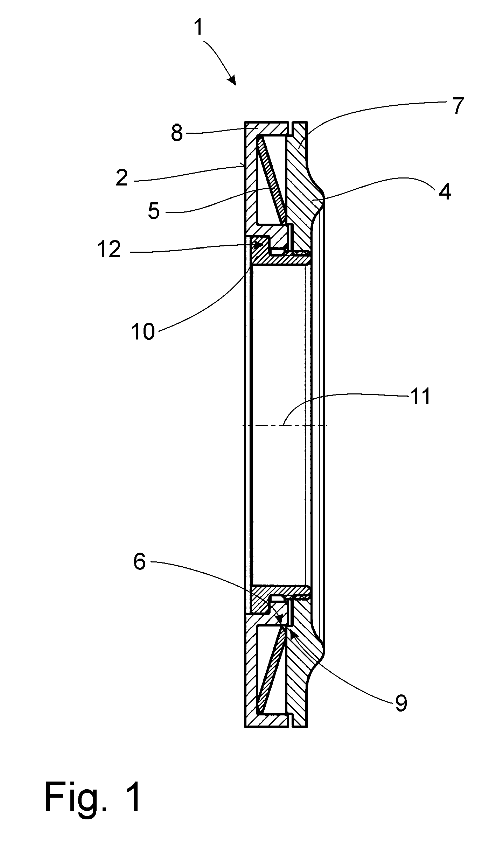

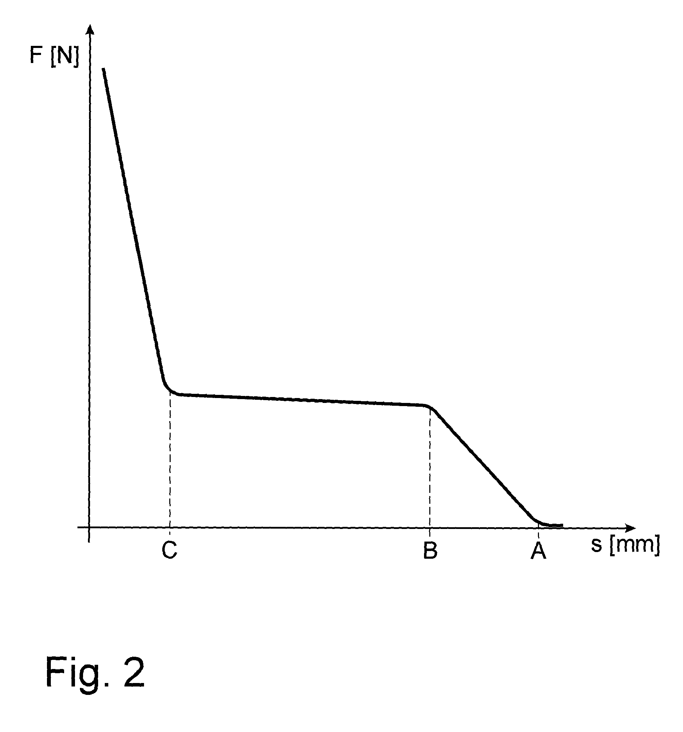

Weitere erfindungsgemäße Merkmale in einer beispielhaften Ausgestaltung sind in den Figurenbeschreibungen der Fig. 1 und 2 offenbart.

Die in der Fig. 1 gezeigte Anpressplatte 1 ist insbesondere auch vorgesehen für Reibungskupplungen entsprechend der DE 10 2004 007 087 A1 und der DE 199 05 373 A1, deren Offenbarungsgehalt hier ausdrücklich mit aufgenommen werden soll.

Es zeigt sich bei beiden vorgenannten Ausführungen, dass die Einkuppelbewegung speziell im Bereich des allmählichen Ineinandergreifens der Reibflächen der Kupplungsscheiben mit ihren Reibpartnern die Modulation, also das gezielte Steuern des Beginns des Reibvorgangs, nur bei ausreichender Erfahrung zufriedenstellend ausgeführt wird. Insbesondere das Anfahren mit dem Kraftfahrzeug gestaltet sich schwierig, weil zu Gunsten einer hohen Anpresskraft nur ein kurzer Einkuppelweg bereitgestellt wird. Diese wird auch durch die US 5,123,510 nicht zufriedenstellend gelöst.

In Fig. 1 ist exemplarisch eine Anpressplatte 1 gezeigt, die insbesondere auch in Reibungskupplungen entsprechend der DE 10 2004 007 087 A1 und der DE 1 99 05 373 A1 zum Einsatz kommt.

Die hier gezeigte Anpressplatte 1 setzt sich zusammen aus einem eine Anpressplattenschneide 4 aufweisenden ersten Bauteil 7, das an einem zweiten Bauteil 8 angebracht ist. Das zweite Bauteil 8 weist insbesondere die Anlagefläche 2 auf, die sich in der Reibungskupplung an den Reibbelägen mit der Anpresskraft abstützt.

Zwischen der Anpressplattenschneide 4 und der Anlagefläche 2 ist in die Anpressplatte 1 ein elastisches Element 5 eingebracht, welches erfindungsgemäß nur über einen Teilbereich des Einkuppelweges, innerhalb dessen sich die Reibbeläge direkt oder indirekt an der Anlagefläche 2 der Anpressplatte 1 abstützen, beim Einkuppelvorgang komprimiert wird. Besonders vorteilhaft gestaltet sich die Erfindung wenn in einem ersten Teilabschnitt der Einkuppelbewegung im wesentlichen keine Komprimierung des elastischen Elementes 5 durch die Anpresskraft stattfindet. Dieser erste Teilabschnitt des Einkuppelweges entspricht in der Figur 2 dem Einkuppelweg zwischen den Punkten A bis B.

An der Anpressplattenschneide 4 stützt sich in der Regel zum Einkuppeln der Reibungskupplung eine Membran- oder Tellerfeder oder ein Einrückelement entsprechend der DE 199 05 373 A1 ab. Die Anpressplattenschneide 4 wird daher in der Regel als Rundung ausgeführt sein. Auch ist es möglich, hier als Anpressplattenschneide 4 einen Drahtring in die Anpressplatte 1 einzubringen auf dem die Membranfeder an der Anpressplatte 1 zur Übertragung der Anpresskraft aufliegt.

Das die Anlagefläche 2 aufweisende zweite Bauteil 8 ist in der dargestellten Ausführung U-förmig im Querschnitt ausgebildet und enthält das elastische Element 5. Des weiteren ist am ersten Bauteil 7 mit der Anpressplattenschneide 4 erfindungsgemäß eine erste Führungsfläche 9 ausgebildet, welche in Führungskontakt mit einer zweiten Führungsfläche 6 am zweiten Bauteil 8 ist. Hier wird bei einer Relativbewegung von Anlagefläche 2 zur Anpressplattenschneide 4 in Kraftrichtung der Anpresskraft das erste Bauteil 7 gegenüber dem zweiten Bauteil 8 geführt und ein Verkippen dieser Bauteile gegeneinander verhindert. Des weiteren werden durch die Führungsflächen 6, 9 das erste Bauteil 7 und das zweite Bauteil 8 relativ zueinander zentriert. Besonders platzsparend gestaltete sich die Anpressplatte 1, wenn die Führungsflächen 6, 9 radial innerhalb der Anpressplattenschneide 4 ausgebildet sind.

Das elastische Element 5 ist in einer in dem die Anlagefläche 2 bildenden zweiten Bauteil 8 ausgebildetenen Ausnehmung eingebracht und vorteilhafterweise in diesem zentriert. Hierfür kann insbesondere die zweite Führungsfläche 6 sich entsprechend in Richtung des elastischen Elementes 5 erstreckend weitergeführt sein.

Über ein Axialsicherungselement 10 sind die Anpressplattenschneide 4 und die Anlagefläche 2 gegeneinander in Axialrichtung, also in Richtung der Anpressplatte, gesichert. Vorteilhaft ist das Axialsicherungselement 10 derart ausgebildet, dass durch dieses der maximale axiale Abstand von der Anpressplattenschneide 4 zur Anlagefläche 2 festgelegt wird. Hierzu erstreckt sich das Axialsicherungselement 10 vom ersten Bauteil 7 in Richtung des zweiten Bauteils 8 und umgreift dieses zumindest teilweise, vorteilhaft in radialer Richtung, mit einem Axialsicherungsabschnitt 12, wobei hier der Axialsicherungsabschnitt erfindungsgemäß eine Relativbewegung der Anpressplattenschneide 4 in Richtung Anlagefläche 2, also vom ersten Bauteil 7 in Richtung zweitem Bauteil 8 in Richtung der Anpresskraft weiter zulässt. Der Axialsicherungsabschnitt 12 stellt nur die maximale Entfernung von Anpressplattenschneide 4 zu Anlagefläche 2 sicher.

In erfindungsgemäßer Weiterbildung ist vorgesehen, dass das Axialsicherungselement 10 in der Verbindung mit dem ersten Bauteil 7 derart einstellbar ist, dass der Axialabstand, also der Abstand in Richtung Anpresskraft im anpresskraftunbelasteten Zustand der Anpressplatte 1, zwischen Anpressplattenschneide 4 und Anlagefläche 2 veränderlich, also einstellbar ist.

Durch den gezeigten Aufbau der Anpressplatte 1 kann die Vorspannung des elastischen Elements 5 im anpresskraftbelasteten Zustand der Anpressplatte 1 erfindungsgemäß verändert werden. Auch kann erfindungsgemäß damit der Betrag der Relativbeweglichkeit zwischen Anpressplattenschneide 4 und Anlagefläche 2, der bei einer Einkuppelbewegung ausgeführt wird, eingestellt werden. So kann z.B. durch Austausch des elastischen Elements 5 gegen eine längere Feder und durch Vergrößern des Abstandes zwischen Anpressplattenschneide 4 und Anlagefläche 2 im anpresskraftfreien Zustand der Anpressplatte 1 ein eventueller Reibbelagverschleiß an Reibbelägen der Reibungskupplung ausgeglichen werden.

### Die Funktion der Anpressplatte 1 ist folgende:

Bei einem Einkuppelvorgang ausgehend vom vollständig ausgekuppelten Zustand der Reibungskupplung ist das elastische Element 5 in der Anpressplatte 1 insoweit entspannt als dass zwischen der Anpressplattenschneide 4 und der Anlagefläche 2 der maximal mögliche Axialabstand, also der maximal mögliche Abstand in Wirkrichtung der Anpresskraft, vorliegt. Der Betrag des Abstandes zwischen Anpressplattenschneide 4 und Anlagefläche 2 ist durch das Axialsicherungselement 10 einstellbar. Hierzu greift das Axialsicherungselement 10 in das zweite Bauteil 8 mit einem Axialsicherungsabschnitt 12 in radialer Richtung. Das Axialsicherungselement 10 ist an dem ersten Bauteil 7 über ein Gewinde mit diesem verbunden womit das Axialsicherungselement 10 insbesondere hinsichtlich der Position des Axialsicherungsabschnittes 12 relativ zum ersten Bauteil 7 axial, also in Richtung der Drehachse 11, veränderlich anbringbar ist. Der Axialsicherungsabschnitt 12 liegt also mit einer Axialfläche an einer Gegenfläche des zweiten Bauteils 8 an, wodurch das elastische Element 5 zwischen erstem Bauteil 7 und zweitem Bauteil 8 im anpresskraftfreien Zustand der Anpressplatte 1 auf die voreingestellte Vorspannung gehalten wird. Im ausgekuppelten Zustand der Reibungskupplung ist das elastische Element 5 in der Anpressplatte 1 auf den vorbestimmten Betrag vorgespannt. Dies geschieht durch entsprechende Einstellung des Axialsicherungsabschnittes 12 relativ zum ersten Bauteil und somit relativ zur Anpressplattenschneide 4 vermittels der Befestigung über das Gewinde des Axialsicherungselementes 10 am ersten Bauteil 7.

Wird nun über die Anpressplattenschneide 4 eine Anpresskraft in Einkuppelrichtung aufgebracht, so werden nach einem bestimmten Einkuppelweg die Reibbeläge in der Reibungskupplung in Anlage an den Reibflächen der Anpressplatte 1 und dem Schwungrad kommen. Dies entspricht in Fig. 2 dem Punkt A auf der Abszisse. In dem Diagramm entsprechend Fig. 2 ist auf der Ordinate die Anpresskraft F an der Anpressplatte in Abhängigkeit zur Einkuppelstellung S der Anpressplatte 1 auf der Abszisse aufgezeichnet. Die Reibbeläge kommen nun an der Anlagefläche 2 der Anpressplatte 1 zur Anlage und beginnen sich an dieser abzustützen. In Fig. 2 entspricht das einer Bewegung der Anpressplatte 1 auf der Abszisse nach links in Richtung der Ordinate. Hierbei beginnt die Bewegung der Anpressplatte 1, also die Einkuppelbewegung, am rechten Ende der im Diagramm der Figur 2 gezeichneten Kurve. Die Anpresskraft beginnt zu steigen entsprechend der Steigung der Kraft-Wege-Kurve der Membranfeder, wie dies bei einer üblichen Reibungskupplung entsprechend der DE 10 2004 007 087 A1 der Fall ist. Dies geschieht bis zum Punkt B.

Beim Punkt B ist die Anpresskraft im wesentlichen so groß wie die Vorspannkraft des elastischen Elements 5. Mit weiter fortschreitender Einkuppelbewegung wird das elastische Element durch dessen Abstützung zwischen erstem Bauteil 7 und zweitem Bauteil 8 weiter mit der über die Anpressplattenschneide 4 aufgebrachten Anpresskraft beaufschlagt. Da die Anpresskraft aber nun nach dem Punkt B größer als die Vorspannkraft des elastischen Elements 5 im ausgekuppelten Zustand der Anpressplatte 1 ist, wird dieses bei fortschreitender Einkuppelbewegung komprimiert. Die beiden ersten Bauteile 7, 8 bewegen sich aufeinander zu. Der Relativabstand, der Axialabstand zwischen der Anpressplattenschneide 4 und der Anlagefläche 2 verringert sich. Hierbei kann die über die Anlagefläche 2 auf die Reibbeläge ausgeübte Anpresskraft nur insoweit steigen als es durch die Steifigkeit des elastischen Elementes 5 vorbestimmt ist.

Das elastische Element 5 wird nun soweit komprimiert, als es durch die maximale Relativbewegbarkeit zwischen der Anpressplattenschneide 4 und der Anlagefläche 2 an der Anpressplatte 1 vorgesehen ist. Dies geschieht soweit, bis das elastische Element 5 maximal komprimiert ist. Dies entspricht in Fig. 2 dem Punkt C.

Während dieser Relativbewegung zwischen der Anpressplattenschneide 4 und der Anlagefläche 2 beim Einkuppelvorgang werden das ersten Bauteil 7 und das zweite Bauteil 8 entlang den Führungsflächen 6, 9 verkippungsfrei geführt.

Mit weiter fortschreitender Einkuppelbewegung steigt die Anpresskraft weiter, ähnlich dem Abschnitt A bis B, also wie es dem Kraft-/Wege-Verlauf der die Anpresskraft erzeugenden Membranfeder entspricht. Die Steigung der Anpresskraft in Einkuppelrichtung ist ab hier deutlich größer als im Bereich B bis C des Diagramms der Figur 2. Durch das vorgenannte Ausführungsbeispiel wird eine Reibungskupplung und eine Anpressplatte für eine Reibungskupplung bereitgestellt, die im Einkuppelbereich, in dem der Fahrer beim Anfahren mit dem Kraftfahrzeug die Kupplung moduliert, also schleifend greifen lässt, durch eine geringere Steigung der Anpresskraft über den Einkuppelweg gut dosierbar ist.

Außerhalb des vorbestimmten Modulationsbereichs, der in Fig. 2 durch die Grenzen C und B festgelegt wird, kann die Reibungskupplung zum Erzielen einer hohen Anpresskraft mit einer sehr steilen Kraft-Wege-Kurve, also z.B. mit einer Membranfeder mit einer großen Steigung der Anpresskraft über den Ausrückweg, ausgebildet sein.

### Bezugszeichenliste

- 1: Anpressplatte
- 2: Anlagefläche
- 3: Reibbeläge
- 4: Anpressplattenschneide
- 5: elastisches Element
- 6: zweite Führungsfläche
- 7: erstes Bauteil
- 8: zweites Bauteil
- 9: erste Führungsfläche
- 10: Axialsicherungselement
- 11: Drehachse
- 12: Axialsicherungsabschnitt

## Patentansprüche

1. Anpressplatte für eine Reibungskupplung zur Übertragung einer Anpresskraft auf Reibbeläge zumindest einer Kupplungsscheibe mit einer Anlagefläche zum Übertragen der Anpresskraft auf die Reibbeläge
- einer Anpressplattenschneide (4) zur Beaufschlagung der Anpressplatte (1) durch die Membran- oder Tellerfeder oder ein Kraftübertragungselement, z.B. Hebel oder Hydraulikzylinder, mit einer An presskraft;
- ein elastisches Element 5 angeordnet zwischen der Anlagefläche (2) und der Anpressplattenschneide (4), wobei das elastische Element durch die Anpresskraft komprimiert werden kann;
**dadurch gekennzeichnet,**
**dass** das elastische Element unter Vorspannung angeordnet ist und erst mit Erreichen einer ersten Anpresskraft komprimiert wird , wobei die Anlagefläche (2) und die Anpressplattenschneide (4) eine begrenzte Relativbevveglichkeit in Kraftrichtung zueinander aufweisen.

2. Anpressplatte nach Anspruch 1,
**dadurch gekennzeichnet,**
**dass** ab Überschreiten einer zweiten Anpresskraft das elastische Element nicht weiter komprimiert wird.

3. Anpressplatte nach Anspruch 1 oder 2,
**dadurch gekennzeichnet,**
**dass** durch das Komprimieren des elastischen Elements durch die Anpresskraft die Anlagefläche (2) und die Anpressplattenschneide (4) sich aufeinander zu bewegen.

4. Anpressplatte nach einem der vorhergehenden Ansprüche,
**dadurch gekennzeichnet,**
**dass** mit Erreichen einer vorbestimmten Relativbewegung zwischen Anlagefläche (2) und Anpressplattenschneide (4) das elastische Element nicht weiter komprimiert wird.

5. Anpressplatte nach einem der vorhergehenden Ansprüche,
**dadurch gekennzeichnet,**
**dass** das elastische Element eine Membran- oder Tellerfeder ist.

6. Anpressplatte nach einem der vorhergehenden Ansprüche,
**dadurch gekennzeichnet,**
**dass** der Weg der begrenzten Relativbeweglichkeit zwischen Anpressplattenschneide (4) und Anlagefläche (2) einstellbar ist.

7. Anpressplatte nach einem der vorhergehenden Ansprüche,
**dadurch gekennzeichnet,**
**dass** das elastische Element innerhalb der Anpressplatte angeordnet ist.

8. Anpressplatte nach einem der vorhergehenden Ansprüche,
**dadurch gekennzeichnet,**
**dass** die Anlagefläche (2) der Anpressplatte (1) als gesondertes Element ausgebildet ist.

9. Anpressplatte nach einem der vorhergehenden Ansprüche,
**dadurch gekennzeichnet,**
**dass** die Anpressplattenschneide (4) als gesondertes Element der Anpressplatte (1) ausgebildet ist.

10. Anpressplatte nach einem der Ansprüche 8 oder 9,
**dadurch gekennzeichnet,**
**dass** die Anlagefläche (2) oder die Anpressplattenschneide (4) eine ringartige Vertiefung aufweist, in der das elastische Element aufgenommen ist.

11. An pressplatte nach einem der vorhergehenden Ansprüche,
**dadurch gekennzeichnet,**
**dass** die Anlagefläche (2) und die Anpressplattenschneide (4) drehfest aber axial beweglich miteinander verbindbar sind.

12. Anpressplatte nach Anspruch 11,
**dadurch gekennzeichnet,**
**dass** die Verbindung radial innerhalb der Anpressplattenschneide (4) ausgebildet ist.

13. Reibungskupplung zur Übertragung eines Drehmomentes in einem Antriebsstrang eines Kraftfahrzeugs mit einer Kupplungsscheibe, einem Kupplungsgehäuse, einem Krafterzeugungselement, insbesondere einer Membranfeder und einer Anpressplatte mit den Merkmalen zumindest einer der Ansprüche 1 bis 12.
